# EUROPEAN PATENT APPLICATION

(11) **EP 4 524 292 A1**
(43) Date of publication of application: **19.03.2025**
(21) Application number: 23753784.0
(22) Date of filing: 28.03.2023
(51) Int. Cl.: C25D 1/04, C25D 3/58, C25D 5/00

(54) **METHOD FOR MANUFACTURING ELECTROLYTIC COPPER FOIL**

(30) Priority: 11.05.2022 KR 20220057721
(71) Applicant: Korea Zinc Co., Ltd., Seoul 03159 (KR)
(72) Inventor: KIM, Jeong Hwan, Ulsan 44661 (KR); HEO, Sae Kwon, Ulsan 45003 (KR); HU, Gyun, Ulsan 45003 (KR)
(74) Representative: Angerhausen, Christoph
(86) International application number: PCT/KR2023/004101
(87) International publication number: WO 2023/219264

(57) **Abstract**

A method for manufacturing an electrolytic copper foil according to one embodiment of the present disclosure includes: preparing an electrolyte containing copper ion and nickel ion by dissolving copper (Cu) and nickel (Ni) in sulfuric acid; and forming a copper layer by supplying an electric current to a positive plate and a negative electrode rotating drum disposed apart from each other in the electrolyte. The concentration of the nickel ion is 50 ppm to 350 ppm.

## Description

### TECHNICAL FIELD

The present disclosure relates to a method for manufacturing an electrolytic copper foil by disposing a positive plate and a negative electrode rotating drum in an electrolyte containing copper ion and nickel ion and supplying an electric current thereto.

### BACKGROUND

Secondary batteries are one type of energy conversion devices that store chemical energy converted from electrical energy and generate electricity by converting chemical energy into electrical energy when electricity is needed. The secondary batteries are also referred to as rechargeable batteries in that they can be recharged.

Among these secondary batteries, a lithium secondary battery has a high operating voltage, a high energy density, and an excellent lifespan characteristic. Recently, demand for a lithium secondary battery is rapidly increasing due to the increased use of portable electronic devices such as a smart phone, a laptop computer and the like and the commercialization of electric vehicles. Such a secondary battery includes a negative electrode current collector made of a copper foil. Among various copper foils, an electrolytic copper foil is widely used as a negative electrode current collector for a secondary battery. Along with the increase in demand for secondary batteries, the demand for high-capacity, high-efficiency, and high-quality secondary batteries increases, which requires a copper foil capable of improving the characteristics of secondary batteries. In particular, there is a demand for a copper foil capable of ensuring high capacity and stable capacity maintenance of secondary batteries.

In recent years, an electrolytic copper foil is continuously manufactured mainly in a roll-to-roll method. This provides an advantage in that a copper foil having a large width and a small thickness can be manufactured in a large quantity. Recently, a copper foil of which a thickness is equal to or less than 10 µm is required. In particular, copper foils of which a thickness is 8 µm and 6 µm are mainly used.

As the thickness of a copper foil becomes small, the number of current collectors that can be accommodated in the same space is increased, which makes it possible to increase the capacity of a secondary battery. However, curls are generated in a thinner copper foil is thinner, and defects such as tears or wrinkles are generated in a copper foil. This makes it difficult to manufacture a copper foil in the form of a very thin film. Therefore, for the manufacture of a copper foil having a very small thickness, it is necessary to prevent the copper foil from being curled.

In view of these points, a copper foil should not be curled, wrinkled, or torn during the process of manufacturing a secondary battery electrode or a secondary battery using a copper foil as well as during the process of manufacturing a copper foil. In particular, in the process of manufacturing a copper foil or an electrode for a secondary battery using the copper foil by a roll-to-roll process, defects such as tears of an edge of the copper foil or the like should not be generated during a winding process or an active material coating process.

Conventionally, in order to suppress curling of an electrolytic copper foil, the amount of organic compound-based additives is adjusted to adjust a curling property. For example, Korean Patent Publication No. 10-0389061 discloses a technique of using saccharin as an organic compound to improve a curling property. Japanese Patent Application Publication No. 2020-530878 discloses a technique of improving a curling property of a copper foil by adding a gloss agent including a metal salt containing arsenic to an electrolyte instead of an organic compound for adjusting physical properties.

If an additive such as saccharin or the like is added, it is possible to adjust the curling property of a copper foil. However, the basic physical properties of the copper foil are changed, and the amount of an additive used to adjust the physical properties needs to be adjusted together, thereby making it difficult to manage a process. Arsenic (As) exists as arsenic acid (H₃AsO₃) in an acidic solution. The arsenic acid is highly toxic and is mainly used as a raw material for rodenticides or insecticides, which poses a problem that requires attention when handling the arsenic acid.

In order to solve these problems, demand has existed for an electrolytic copper foil manufacturing technique that can be easily managed and can easily adjust the curling property of the electrolytic copper foil without changing the amount of additives used to adjust the physical properties of the electrolytic copper foil.

### [Prior Art Document]

(Patent Document 1) Korean Patent Publication No. 10-0389061
(Patent Document 2) Japanese Patent Application Publication No. 2020-530878

### SUMMARY

The present disclosure is designed to prevent the generation of defects such as tears or wrinkles in an electrolytic copper foil by preventing curls from being generated during a process of manufacturing the electrolytic copper foil, and is intended to provide a method for manufacturing an electrolytic copper foil capable of preventing the generation of curls in the electrolytic copper foil by adding nickel (Ni) ion to an electrolyte for manufacturing the electrolytic copper foil.

A method for manufacturing an electrolytic copper foil according to one embodiment of the present disclosure includes: preparing an electrolyte containing copper ion and nickel ion by dissolving copper (Cu) and nickel (Ni) in sulfuric acid; and forming a copper layer by supplying an electric current to a positive plate and a negative electrode rotating drum disposed apart from each other in the electrolyte, wherein a concentration of the nickel ion is 50 ppm to 350 ppm.

A curl measurement value of the electrolytic copper foil is equal to or less than 12 mm.

The concentration of the nickel ion is 80 ppm to 280 ppm.

A curl measurement value of the electrolytic copper foil is equal to or less than 10 mm.

A current density supplied into the electrolyte is 4,500 A/m² to 6,500 A/m².

A concentration of the copper ion is 70 g/L to 100 g/L, and A concentration of the sulfuric acid is 80 g/L to 150 g/L.

An organic additive is further added when the electrolyte is prepared, and the organic additive includes at least one of an elongation agent, a tensile strength agent, and a gloss agent.

The elongation agent contains a nonionic water-soluble polymer, the tensile strength agent contains at least one of a thiourea-based compound and a compound in which a thiol group is linked to a hetero ring including nitrogen, and the gloss agent contains sulfonic acid, which is a compound containing sulfur atoms, or a metal salt thereof.

The elongation agent contains at least one of carboxymethyl cellulose, polyethylene glycol, hydroxyethyl cellulose (HEC), octane diol-bis-polyalkylene glycol ether, and polyglycerin.

A concentration of the elongation agent is 1 ppm to 20 ppm.

The tensile strength agent contains at least one of diethylthiourea, ethylenethiourea, acetylene thiourea, and 2-thiouracil.

A concentration of the tensile strength agent is 5 ppm to 50 ppm.

The gloss agent contains at least one of thiophosphoric acid-tris-(ω-sulfopropyl) ester trisodium salt, 3-mercapto-1-propanesulfonic acid (MPS), Bis-(3-Sulfopropyl)-disulfide disodium salt (SPS), and thioglycolic acid.

A concentration of the gloss agent is 1 ppm to 30 ppm.

A thickness of the electrolytic copper foil is 10 µm or less.

According to the disclosed method for manufacturing an electrolytic copper foil, the curling property of the electrolytic copper foil can be improved by adding copper ion and nickel ion to an electrolyte for manufacturing the electrolytic copper foil.

### DETAILED DESCRIPTION

Hereinafter, an embodiment of the present disclosure will be described in detail so that those skilled in the art can easily practice them. However, the present disclosure may be embodied in many different forms and is not limited to the embodiment described herein.

In order to manufacture a copper foil, first, copper (Cu) and nickel (Ni) are dissolved in sulfuric acid to prepare an electrolyte containing copper ion and nickel ion. The electrolyte is accommodated in an electrolytic cell.

Next, a positive plate and a negative electrode rotating drum disposed apart from each other in the electrolyte are energized at a current density of 4,500 A/m² to 6,500 A/m² to form a copper layer. The copper layer is formed by the principle of electroplating.

The copper layer thus formed is cleaned in a cleaning bath, and impurities on the surface of the copper layer are removed in the cleaning process. Next, the copper layer is immersed in an anti-rust solution contained in an anti-rust bath to form an anti-rust film on the copper layer. A copper foil is made by the formation of such an anti-rust film. The copper foil is finally cleaned in the cleaning bath, dried, and then wound by a winder, whereby the copper foil manufacturing process is completed. The copper foil may be manufactured through processes commonly used in the industry other than the copper foil manufacturing process described above.

The electrolytic copper foil manufactured in the above-described manner may be used for a negative electrode current collector of a secondary battery.

The electrolyte contains 70 g/L to 100 g/L of copper ion, 80 g/L to 150 g/L of sulfuric acid, and 50 ppm to 350 ppm of nickel ion, preferably 80 ppm to 280 ppm of nickel ion. Under the above concentration conditions of copper ion and sulfuric acid, the formation of a copper layer by electrodeposition of copper can be smoothly performed.

The organic additives contained in the electrolyte includes at least one of an elongation agent, a tensile strength agent, and a gloss agent.

The elongation agent contains nonionic water-soluble polymers. The elongation agent may have a concentration of 1 ppm to 20 ppm in the electrolyte. The elongation agent may contribute to maintaining and improving the elongation of the copper foil.

The elongation agent contains at least one of carboxymethyl cellulose, polyethylene glycol, hydroxyethyl cellulose (HEC), octane diol-bis-polyalkylene glycol ether, and polyglycerin. However, the type of elongation agent is not limited thereto. Other nonionic water-soluble polymers that can be used in the manufacture of a copper foil may be used as the elongation agent.

The tensile strength agent contains at least one of a thiourea-based compound and a compound in which a thiol group is linked to a hetero ring including nitrogen.

The tensile strength agent has a concentration of 5 ppm to 50 ppm in the electrolyte. The tensile strength agent contributes to maintaining and improving the tensile strength of the copper foil.

The tensile strength agent contains at least one of diethylthiourea, ethylenethiourea, acetylene thiourea and 2-thiouracil.

The gloss agent contains sulfonic acid, which is a compound containing sulfur atoms, or a metal salt thereof. The gloss agent has a concentration of 1 ppm to 30 ppm in the electrolyte.

The gloss agent increases the electric charges in the electrolyte to increase the electrodeposition rate of copper and enhances the surface glossiness of the copper foil.

The gloss agent contains at least one of thiophosphoric acid-tris-(ω-sulfopropyl) ester trisodium salt, 3-mercapto-1-propanesulfonic acid (MPS), Bis-(3-Sulfopropyl)-disulfide disodium salt (SPS), and thioglycolic acid.

Hereinafter, the contents of the embodiment of the present disclosure will be described in detail through Inventive Examples and Comparative Examples. However, the Inventive Examples and the Comparative Examples to be described later are intended to aid understanding of the present disclosure. The scope of the present disclosure is not limited by the Inventive Examples or Comparative Examples.

### Example 1

In Example 1, electrolytic copper foils were manufactured by a foil manufacturing machine that includes an electrolytic cell containing an electrolyte, and a positive plate and a negative electrode rotating drum disposed spaced apart from each other in the electrolyte. The electrolyte is an electrolyte containing copper ion and nickel ion, which is obtained by dissolving copper and nickel in sulfuric acid. The concentration of the copper ion in the electrolyte was set to 80 g/L, the concentration of the sulfuric acid in the electrolyte was set to 100 g/L, the concentration of the elongation agent (HEC: hydroxyethyl cellulose) in the electrolyte was set to is 10 ppm, the concentration of the tensile strength agent (diethylthiourea) in the electrolyte was set to is 25 ppm, the concentration of the gloss agent (SPS: Bis-(3-Sulfopropyl)-disulfide-disodium salt) in the electrolyte was set to 15 ppm, the temperature of the electrolyte was set to 54 degrees C, and the flow rate was set to 3,000 L/hr.

In addition, the concentration of the nickel ion contained in the electrolyte was set as shown in Table 1 below, and was regulated by the amount of nickel sulfate added. The electrolytic copper foil having a thickness of 8µm was continuously manufactured by supplying an electric current to the electrolytic cell by a constant current method at a current density of 5,769 A/m² while rotating the negative electrode rotating drum at a speed of 1.47 m/min. The electrolytic copper foils of Inventive Examples 1-1 to 1-13 and Comparative Examples 1-1 to 1-7 were manufactured by changing the concentration of the nickel ion.

The electrolytic copper foils manufactured in Inventive Examples 1-1 to 1-13 and Comparative Examples 1-1 to 1-7 were cut into 10 cm-wide and 10 cm-long specimens. After placing the specimens on a flat floor, the heights at which the corners of the electrolytic copper foils are bent from the bottom were measured and shown in Table 1.

**[Table 1]**

| Curl measurement value of copper foil according to change in nickel (Ni) content | | |
|---|---|---|
| | Ni (ppm) | Curl (mm) |
| Com Ex 1-1 | 0 | 25.7 |
| Com Ex 1-2 | 25 | 21.9 |
| Com Ex 1-3 | 40 | 15.7 |
| Inv Ex 1-1 | 50 | 11.9 |
| Inv Ex 1-2 | 80 | 9.6 |
| Inv Ex 1-3 | 100 | 6.7 |
| Inv Ex 1-4 | 120 | 7.1 |
| Inv Ex 1-5 | 150 | 7.7 |
| Inv Ex 1-6 | 180 | 7.9 |
| Inv Ex 1-7 | 200 | 7.9 |
| Inv Ex 1-8 | 230 | 8 |
| Inv Ex 1-9 | 250 | 8.2 |
| Inv Ex 1-10 | 280 | 9.5 |
| Inv Ex 1-11 | 300 | 10.4 |
| Inv Ex 1-12 | 320 | 10.9 |
| Inv Ex 1-13 | 350 | 11.7 |
| Com Ex 1-4 | 380 | 13.4 |
| Com Ex 1-5 | 400 | 14.5 |
| Com Ex 1-6 | 450 | 15.8 |
| Com Ex 1-7 | 500 | 16.9 |

Referring to Table 1, it can be confirmed that the curl measurement value of the electrolytic copper foil manufactured in Comparative Example 1-1 in which nickel was not added to the electrolyte is as high as 25.7 mm, whereas the curl measurement values of the electrolytic copper foils manufactured in Inventive Examples 1-1 to 1-13 in which nickel ion were added to the electrolyte at a concentration of 50 ppm to 350 ppm are suppressed to 12 mm or less. In addition, it can be confirmed that when the concentration of the nickel ion in the electrolyte is 80 ppm to 280 ppm as in Inventive Examples 1-2 to 1-10, the curl measurement values of the electrolytic copper foils are suppressed to 10 mm or less. By adding an appropriate amount of nickel to the electrolyte during the manufacture of the electrolytic copper foil, it is possible to reduce the residual stress inside the electrolytic copper foil, and consequently, reduce the curl measurement value of the electrolytic copper foil. In general, when the curl measurement value of the electrolytic copper foil is 12 mm or less, it is considered that the curl property is excellent, and when the curl measurement value is 10 mm or less, it is considered that the curl property is very good.

It is confirmed that the electrolytic copper foils manufactured under the condition that the nickel concentration in the electrolyte is 50 ppm or less as in Comparative Examples 1-2 and 1-3 show less generation of curls than the electrolytic copper foil of Comparative Example 1 in which nickel is not added at all. However, the curl generation suppression effect is not large.

It is confirmed that the electrolytic copper foils manufactured in Comparative Examples 1-4 to 1-7 in which the concentration of nickel ion in the electrolyte exceeds 350 ppm show a decrease in the curl generation suppression effect. Presumably, the curl generation suppression effect is reduced because if the concentration of nickel ion in the electrolyte exceeds a certain range, the uniform growth of copper particles is hindered.

Therefore, by regulating the concentration of the nickel ion in the electrolyte for manufacturing the electrolytic copper foil to be 50 ppm to 350 ppm, preferably 80 ppm to 280 ppm, it is possible to manufacture an electrolytic copper foil having an improved curl property.

**Example 2**

In Example 2, electrolytic copper foils were manufactured under the same conditions as in Example 1, except that the concentration of copper ion, the concentration of sulfuric acid, and the concentration of nickel ion in the electrolyte of Example 1 are changed as shown in Table 2.

The electrolytic copper foils manufactured in Inventive Examples 2-1 to 2-6 and Comparative Examples 2-1 to 2-4 were cut into 10 cm-wide and 10 cm-long specimens. After placing the specimens on a flat floor, the heights at which the corners of the electrolytic copper foils are bent from the bottom were measured and shown in Table 2.

**[Table 2]**

| Curl measurement value of copper foil according to change in content of copper (Cu), nickel (Ni), and sulfuric acid | | | | |
|---|---|---|---|---|
| | Cu (g/L) | H₂SO₄ (g/L) | Ni (ppm) | Curl (mm) |
| Com Ex 2-1 | 75 | 90 | 35 | 18.4 |
| Com Ex 2-2 | 85 | 110 | 40 | 16.1 |
| Inv Ex 2-1 | 75 | 90 | 65 | 10.8 |
| Inv Ex 2-2 | 85 | 110 | 75 | 10.2 |
| Inv Ex 2-3 | 85 | 110 | 125 | 6.9 |
| Inv Ex 2-4 | 75 | 90 | 160 | 7.6 |
| Inv Ex 2-5 | 85 | 110 | 310 | 11.2 |
| Inv Ex 2-6 | 75 | 90 | 330 | 11.6 |
| Com Ex 2-3 | 75 | 90 | 420 | 14.8 |
| Com Ex 2-4 | 85 | 110 | 440 | 15.5 |

Referring to Table 2, it can be confirmed that the curl measurement values of the electrolytic copper foils manufactured in Inventive Examples 2-1 to 2-6 in which nickel ion were added to the electrolyte containing copper ion and nickel ion at a concentration of 50 ppm to 350 ppm are suppressed to 12 mm or less even if the concentration of copper ion and the concentration of sulfuric acid are changed within a certain range. On the other hand, it can be confirmed that when the concentration of the nickel ion is out of 50 ppm to 350 ppm (Comparative Examples 2-1 to 2-4), the curl generation amount exceeds 12 mm. In addition, as confirmed in Example 1, it can be confirmed that when the concentration of the nickel ion is 80 ppm to 280 ppm, i.e., even in the case of Inventive Examples 2-2, 2-3 and 2-4 of Example 2, the curl measurement values of the electrolytic copper foils are suppressed to 10 mm or less. Therefore, by regulating the concentration of the nickel ion in the electrolyte for manufacturing the electrolytic copper foil to be 50 ppm to 350 ppm, preferably 80 ppm to 280 ppm, it is possible to manufacture an electrolytic copper foil having an improved curl property.

### Example 3

In Example 3, electrolytic copper foils were manufactured under the same conditions as in Example 1, except that the concentration of the elongation agent (HEC: hydroxyethyl cellulose), the concentration of the tensile strength agent (diethylthiourea), the concentration of the gloss agent (SPS: Bis-(3-Sulfopropyl)-disulfide disodium salt), and the concentration of the nickel ion are changed as shown in Table 3.

The electrolytic copper foils manufactured in Inventive Examples 3-1 to 3-8 and Comparative Examples 3-1 to 3-4 were cut into 10 cm-wide and 10 cm-long specimens. After placing the specimens on a flat floor, the heights at which the corners of the electrolytic copper foils are bent from the bottom were measured and shown in Table 3.

**[Table 3]**

| Curl measurement value of copper foil according to change in nickel (Ni) content | | | | | |
|---|---|---|---|---|---|
| | HEC (ppm) | DTE (ppm) | SPS (ppm) | Ni (ppm) | Curl (mm) |
| Com Ex 3-1 | 15 | 35 | 25 | 10 | 23.4 |
| Com Ex 3-2 | 5 | 15 | 10 | 30 | 22.3 |
| Inv Ex 3-1 | 15 | 35 | 25 | 60 | 11.5 |
| Inv Ex 3-2 | 5 | 15 | 10 | 90 | 8.4 |
| Inv Ex 3-3 | 15 | 35 | 25 | 100 | 7.1 |
| Inv Ex 3-4 | 5 | 15 | 10 | 130 | 7.5 |
| Inv Ex 3-5 | 15 | 35 | 25 | 280 | 10.5 |
| Inv Ex 3-6 | 5 | 15 | 10 | 300 | 10.7 |
| Inv Ex 3-7 | 15 | 35 | 25 | 330 | 11.4 |
| Inv Ex 3-8 | 5 | 15 | 10 | 350 | 11.6 |
| Com Ex 3-3 | 5 | 15 | 10 | 450 | 15.3 |
| Com Ex 3-4 | 15 | 35 | 25 | 460 | 16.8 |

| | | | | | |
|---|---|---|---|---|---|
| - HEC: hydroxyethyl cellulose - DTE: diethylthiourea - SPS: Bis-(3-Sulfopropyl)-disulfide disodium salt | | | | | |

Referring to Table 3, it can be confirmed that the curl measurement values of the electrolytic copper foils manufactured in Inventive Examples 3-1 to 3-8 in which nickel ion were added to the electrolyte at a concentration of 50 ppm to 350 ppm are suppressed to 12 mm or less even if the concentration of the elongation agent (HEC: hydroxyethyl cellulose), the concentration of the tensile strength agent (diethylthiourea), the concentration of the gloss agent (SPS: Bis-(3-Sulfopropyl)-disulfide disodium salt), and the concentration of the nickel ion are changed within a certain range. On the other hand, it can be confirmed that when the concentration of the nickel ion is out of 50 ppm to 350 ppm (Comparative Examples 3-1 to 3-4), the curl generation amount exceeds 12 mm.

In addition, as confirmed in Example 1, it can be confirmed that when the concentration of the nickel ion is 80 ppm to 280 ppm, i.e., even in the case of Inventive Examples 3-2, 3-3 and 3-4 of Example 3, the curl measurement values of the electrolytic copper foils are suppressed to 10 mm or less.

Therefore, by regulating the concentration of the nickel ion in the electrolyte for manufacturing the electrolytic copper foil to be 50 ppm to 350 ppm, preferably 80 ppm to 280 ppm, it is possible to manufacture an electrolytic copper foil having an improved curl property.

According to the Inventive Examples of the present disclosure, the tearing of the electrolytic copper foil can be prevented by preventing generation of curls that may otherwise be generated during the process of manufacturing the electrolytic copper foil.

Although the present invention has been described in relation to some embodiments in this specification, it should be noted that various modification and changes may be made without departing from the scope of the present invention that can be understood by those skilled in the art. Moreover, such modification and changes should be construed to fall within the scope of the claims appended hereto.

## Claims

1. A method for manufacturing an electrolytic copper foil, comprising:
preparing an electrolyte containing copper ion and nickel ion by dissolving copper (Cu) and nickel (Ni) in sulfuric acid; and
forming a copper layer by supplying an electric current to a positive plate and a negative electrode rotating drum disposed apart from each other in the electrolyte,
wherein a concentration of the nickel ion is 50 ppm to 350 ppm.

2. The method of Claim 1, wherein a curl measurement value of the electrolytic copper foil is equal to or less than 12 mm.

3. The method of Claim 1, wherein the concentration of the nickel ion is 80 ppm to 280 ppm.

4. The method of Claim 3, wherein a curl measurement value of the electrolytic copper foil is equal to or less than 10 mm.

5. The method of any one of Claims 1 to 4, wherein a current density supplied into the electrolyte is 4,500 A/m2 to 6,500 A/m2.

6. The method of any one of Claims 1 to 4, wherein a concentration of the copper ion is 70 g/L to 100 g/L, and a concentration of the sulfuric acid is 80 g/L to 150 g/L.

7. The method of any one of Claims 1 to 4, wherein an organic additive is further added when the electrolyte is prepared, and the organic additive includes at least one of an elongation agent, a tensile strength agent, and a gloss agent.

8. The method of Claim 7, wherein the elongation agent contains a nonionic water-soluble polymer,
the tensile strength agent contains at least one of a thiourea-based compound and a compound in which a thiol group is linked to a hetero ring including nitrogen, and
the gloss agent contains sulfonic acid, which is a compound containing sulfur atoms, or a metal salt thereof.

9. The method of Claim 8, wherein the elongation agent contains at least one of carboxymethyl cellulose, polyethylene glycol, hydroxyethyl cellulose (HEC), octane diol-bis-polyalkylene glycol ether, and polyglycerin.

10. The method of Claim 9, wherein a concentration of the elongation agent is 1 ppm to 20 ppm.

11. The method of Claim 8, wherein the tensile strength agent contains at least one of diethylthiourea, ethylenethiourea, acetylene thiourea, and 2-thiouracil.

12. The method of Claim 11, wherein a concentration of the tensile strength agent is 5 ppm to 50 ppm.

13. The method of Claim 8, wherein the gloss agent contains at least one of thiophosphoric acid-tris-(ω-sulfopropyl) ester trisodium salt, 3-mercapto-1-propanesulfonic acid (MPS), Bis-(3-Sulfopropyl)-disulfide disodium salt (SPS), and thioglycolic acid.

14. The method of Claim 13, wherein a concentration of the gloss agent is 1 ppm to 30 ppm.

15. The method of any one of Claims 1 to 4, wherein a thickness of the electrolytic copper foil is 10 µm or less.
